# EUROPEAN PATENT APPLICATION

(11) **EP 4 446 686 A1**
(43) Date of publication of application: **16.10.2024**
(21) Application number: 24165829.3
(22) Date of filing: 25.03.2024
(51) Int. Cl.: F28F 7/02

(54) **ADDITIVELY MANUFACTURED HEAT EXCHANGER WITH MULTIPLE MIXTURES OF MATERIALS**

(30) Priority: 24.03.2023 US 202318126092
(71) Applicant: Hamilton Sundstrand Corporation, Charlotte, NC 28217-4578 (US)
(72) Inventor: KILCHYK, Viktor, Lancaster, NY 06110 (US); MERRITT, Brent J., Southwick, MA, 01077 (US)
(74) Representative: Dehns

(57) **Abstract**

A heat exchanger includes a first header (20), a second header (22), and a core (24). The first header includes a fluid inlet (28). The second header is positioned downstream of the first header with respect to a first flow path of a first fluid. The second header includes a fluid outlet (30). The core extends from the first header to the second header. The core includes a plurality of tubes (32). The heat exchanger also includes a first region (60) which is at a higher temperature than regions adjacent to the first region. The first region is made of a first mixture of materials in a first ratio. The first mixture of materials causes a coefficient of thermal expansion in the first region to be lower than coefficients of thermal expansion in the regions adjacent to the first region.

## Description

### BACKGROUND

The present disclosure relates generally to heat exchangers, and, more specifically, to additively manufactured heat exchangers made from multiple materials.

Heat exchangers are used in many industries for a variety of applications. In mobile applications, particularly aerospace applications, heat exchangers may be used to provide compact, low-weight, and highly effective means of exchanging heat from a hot fluid to a cold fluid. Heat exchangers include headers (or manifolds) on either side of a set of tubes that make up a heat exchanger core. Heat exchangers experience temperature variation in space and time including extreme heat and cold, and thus may be exposed to high thermal stresses. These variations include cyclic thermal loads from on/off cycles and variation in external temperature and pressure from changes in altitude. These temperature variations can cause thermal stress in heat exchangers made with materials that have relatively consistent coefficients throughout the heat exchanger.

Thermal stress is mechanical stress (pressure or tension exerted on a physical object) caused by changes in temperature. Sufficiently high levels of thermal stress lead to tube bending, high manifold stress, metal strain, fatigue, and cracking. Thermal stress is caused by thermal gradients in a material, thermal expansion or contraction, and thermal shock (quick changes in temperature which lead to quick expansion or contraction). Varying a coefficient of thermal expansion (CTE) can reduce a material's susceptibility for thermal stress.

### SUMMARY

A heat exchanger includes a first header, a second header, and a core. The first header includes a fluid inlet. The second header is positioned downstream of the first header with respect to a first flow path of a first fluid. The second header includes a fluid outlet. The core extends from the first header to the second header. The core includes a plurality of tubes. The heat exchanger also includes a first region which is at a higher temperature than regions adjacent to the first region. The first region is made of a first mixture of materials in a first ratio. The first mixture of materials causes a coefficient of thermal expansion in the first region to be lower than coefficients of thermal expansion in the regions adjacent to the first region.

A method of manufacturing a heat exchanger with multiple materials includes performing thermal analysis of a heat exchanger to obtain a temperature distribution. The method further includes performing structural analysis of thermal stress in the heat exchanger utilizing the temperature distribution. The method further includes identifying regions of the heat exchanger with levels of thermal stress higher than in adjacent regions. The method further includes determining target coefficients of thermal expansion for each of the identified regions with high levels of thermal stress. The target coefficients of thermal expansion reduce thermal stress in each of the identified regions with high levels of thermal stress. The method also includes choosing materials with which to manufacture the heat exchanger. The method further includes manufacturing the heat exchanger by mixing the materials create the target coefficients of thermal expansion in the identified regions of high thermal stress.

### BRIEF DESCRIPTION OF THE DRAWINGS

FIG. 1 is a schematic diagram illustrating a heat exchanger mounted in a heat exchange system.
FIG. 2 is a schematic diagram illustrating fluid flow in the heat exchange system of FIG. 1.
FIG. 3 is a schematic view of three tube sections in the heat exchanger of FIG. 1.
FIG 4 is a schematic view of a cross section of the core of the heat exchanger taken along line 3-3 of FIG. 1.
FIG. 5 is a flow chart showing a method of designing and manufacturing the heat exchanger with multiple materials.
FIG. 6 is a flow chart showing a method of additively manufacturing the heat exchanger with multiple materials.

### DETAILED DESCRIPTION

Heat exchangers include headers (or manifolds) and cores (made of tubes) to efficiently heat or cool fluid moving through an internal space of the heat exchanger. Headers and cores are made of metals and metal-composite material mixtures to allow thermal exchange between fluid in the internal space and fluid in an external space of the heat exchanger. As thermal exchange occurs down a length of the heat exchanger, thermal gradients are created along the length of the heat exchanger. Heat exchangers can also have hot spots and cold spots. Temperature in a single region in a heat exchanger also changes with time, especially as the heat exchanger warms up or cools off during a transitional operational phase. Transitional operational phases include operation of the heat exchanger between being turned on and reaching peak operational phase. Transitional operational phases can also include operation between the heat exchanger being turned off and cooled to ambient temperature. The combination of thermal gradients, hot and cold spots, and temperature changes through time create thermal stress in the heat exchanger. Metal fatigue and cracking occur from thermal stress. Cracking can put a heat exchanger out of commission, leading to repairs and delays.

Additive manufacturing techniques are commonly used to manufacture heat exchangers. Additively manufactured heat exchangers made of a single metal or material can increase rates of heat exchanger failures from crevices in the grain structure of the heat exchanger, which lead to cracks during operation. Further, a single-material additively manufactured heat exchanger in theory has a constant CTE. Additively manufactured heat exchangers actually have variable (coefficients of thermal expansion) CTEs, which are referred throughout this application as "relatively consistent CTEs." These relatively consistent CTEs are in unpredictable regions due to non-uniform material density, grain structure variations, and fissures or microcracks from additive manufacturing. The varied and unpredictable nature of relatively consistent CTEs can exacerbate thermal stress in the heat exchanger, leading to cracking.

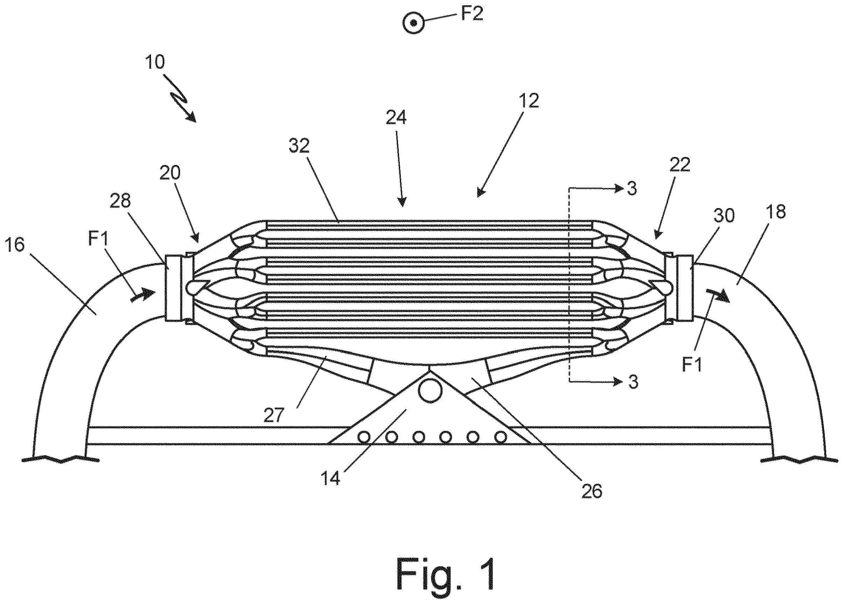

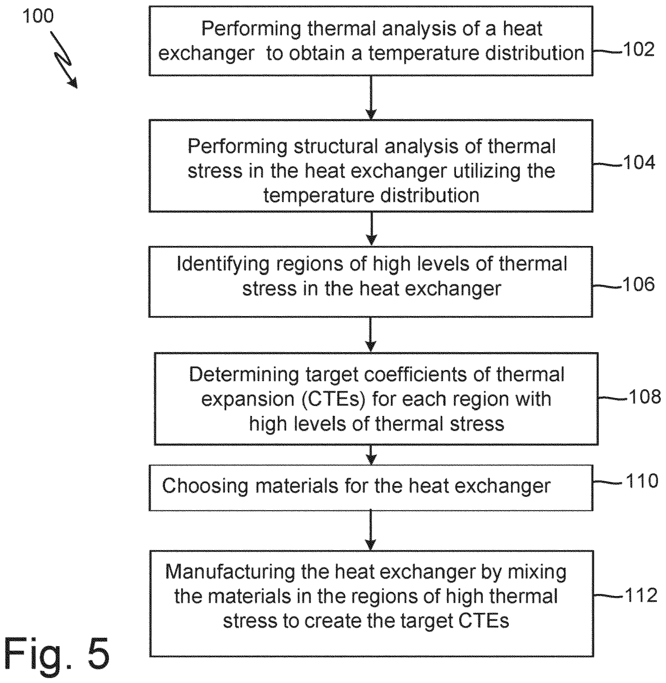

Additive manufacturing techniques can be utilized to manufacture heat exchangers layer by layer using multiple materials to create more predictable CTEs in finished heat exchangers and reduce damage caused by thermal stress. Such manufacturing techniques also allow for specific placement of different material mixtures to create a target CTE in a desired region and reduce thermal stress in the heat exchanger. Additive manufacturing also allows for gradual change in material mixture compositions to reduce interfaces of different material mixtures, which can lead to cracking and fracturing along the interfaces. Heat exchangers utilizing multiple materials will be discussed in relation to FIGS. 1-4. Methods of manufacturing heat exchangers with multiple materials will be discussed in relation to FIGS. 5-6

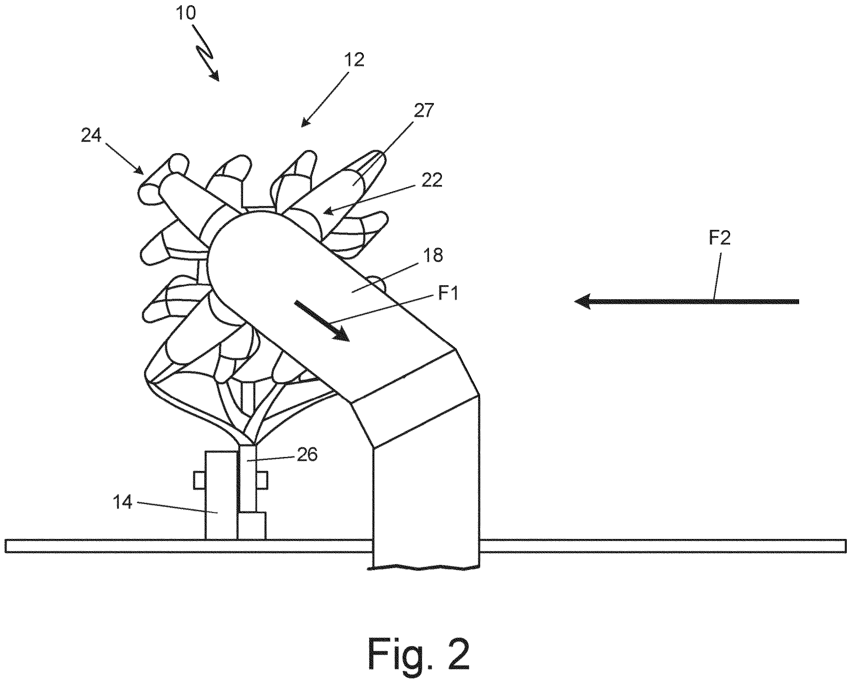

FIG. 1 is a schematic diagram illustrating heat exchanger 12 mounted in heat exchange system 10. FIG. 2 is a schematic diagram illustrating fluid flow in heat exchange system 10. FIGS. 1-2 will be described together. FIGS. 1-2 show heat exchange system 10, including heat exchanger 12, external mount 14, first duct 16, and second duct 18. Heat exchanger 12 includes first header 20, second header 22, core 24, mount structure 26, and exterior surface 27. First header 20 includes fluid inlet 28, and second header 22 includes fluid outlet 30. Core 24 includes core tubes 32. FIGS. 1-2 also show internal fluid flow path F1 and external fluid flow path F2.

Heat exchange system 10 includes heat exchanger 12 connected between first duct 16 and second duct 18. In some examples, heat exchange system 10 can be on an aircraft, such as part of an aircraft environmental control system or other aircraft system. In other examples, heat exchange system 10 can be used in any implementation for exchanging heat between fluids. Fluids can be liquids, gasses, and combinations thereof. As illustrated in FIG. 1, heat exchanger 12 is attached to external mount 14 between first duct 16 and second duct 18. External mount 14 is an attachment portion of a structure that is external to heat exchanger 12. External mount 14 can take many different forms, such as a flange, a bracket, etc. suitable for attaching to heat exchanger 12. For example, external mount 14 can be part of or extend from a flange or lip of an aircraft engine wall.

First duct 16 and second duct 18 are pipes, tubes, or other passageways for containing fluid flowing into or out of heat exchanger 12. First duct 16 connects to a first end of heat exchanger 12, and second duct 18 connects to a second end of heat exchanger 12. As illustrated in FIG. 1, heat exchanger 12 forms a relatively straight path between first duct 16 and second duct 18 such that first duct 16 and second duct 18 are on opposite ends of heat exchanger 12. In other examples, heat exchanger 12 could form a curved path between ducts in any orientation with respect to one another.

Heat exchanger 12 is connected to first duct 16 at first header 20. More specifically, first duct 16 is connected to fluid inlet 28 of first header 20. Fluid inlet 28 includes a first opening into the flow passages of heat exchanger 12. Heat exchanger 12 is similarly connected to second duct 18 at fluid outlet 30 of second header 22. Fluid outlet 30 includes a second opening into the flow passages of heat exchanger 12. As illustrated in FIG. 1, each of first header 20 and second header 22 can be a branched or fractal header. That is, first header 20 and/or second header 22 can include a consecutively branching tubular structure that terminates in individual tubes that are continuous with corresponding individual core tubes 32 of core 24. In the example shown in FIG. 1, first header 20 and second header 22 have mirrored branching structures having the same number and arrangement of sequential branches; however, other examples can include first header 20 and second header 22 with different respective branching structures. In yet other examples, first header 20 can be any suitable type of header for directing fluid from first duct 16 into core 24 of heat exchanger 12, and second header 22 can be any suitable type of header for directing fluid from core 24 into second duct 18.

Core 24 of heat exchanger 12 extends from first header 20 to second header 22. Core 24 includes core tubes 32. Each of core tubes 32 is an individual tube through which fluid can flow. Moreover, each of core tubes 32 is connected to a corresponding individual tube at a terminal end of the branching structure of first header 20 at one end. Each of core tubes 32 is also connected to a corresponding individual tube at a terminal end of the branching structure of second header 22 at an opposite end. Core tubes 32 are spaced apart from adjacent tubes. Although not shown in FIG. 1, core 24 can also include supports between core tubes 32. Core 24 can form an overall straight path between first header 20 and second header 22 (e.g., as shown in FIG. 1) or can be curved or split into different portions, depending on the space (i.e., envelope) in which heat exchanger 12 will be mounted.

Mount structure 26 is a structural portion of heat exchanger 12 for attaching heat exchanger 12 to external mount 14. Mount structure 26 extends between first header 20 and second header 22. Mount structure 26 is generally adjacent to core 24 along a side of heat exchanger 12. Mount structure 26 can include mating features for connecting to external mount 14. Mount structure 26 is configured to have adequate structural integrity for accommodating vibrational loads on heat exchanger 12. For example, external mount 14 may be connected to or part of an aircraft engine. In such examples, mount structure 26 of heat exchanger 12 can experience vibrations from the aircraft engine due to its attachment to external mount 14. When heat exchanger 12 is mounted in heat exchange system 10, mount structure 26 supports heat exchanger 12 in a desired position for connecting between first duct 16 and second duct 18. Mount structure 26 can be connected to and integrally formed with some of core tubes 32.

Heat exchange system 10 includes two flow paths: internal fluid flow path F1 and external fluid flow path F2. In general, internal fluid flow path F1 is formed by a series of continuous passages through first duct 16, heat exchanger 12, and second duct 18. External fluid flow path F2 surrounds and passes around components of heat exchanger 12. As illustrated in FIGS. 1-2, heat exchange system 10 is configured such that a first fluid flows along internal fluid flow path F 1 and a second fluid flows along external fluid flow path F2 in a crossflow arrangement. That is, internal fluid flow path F1 is generally perpendicular to external fluid flow path F2. Alternatively, heat exchange system 10 could be configured such that internal fluid flow path F1 and external fluid flow path F2 are counter-parallel and the first and second fluids would interact in a counterflow arrangement.

Heat exchanger 12 is configured to permit the transfer of heat between the first fluid flowing along internal fluid flow path F1 and the second fluid flowing along external fluid flow path F2. The first and second fluids can be any type of fluids, including air, water, lubricant, fuel, or another fluid. Moreover, the first and second fluids can be the same or different types of fluids. For example, the first fluid can be a liquid and the second fluid can be a gas. The first fluid and the second fluid can have different temperatures. Heat exchanger 12 is generally described herein as providing heat transfer from the first fluid to the second fluid; therefore, the first fluid can be at a greater temperature than the second fluid at the point where the first fluid enters heat exchanger 12. In one example, the first fluid can be around 1,000°F and the second fluid can be around 100°F or an order of magnitude lower. However, other heat exchange configurations of heat exchange system 10 can include the second fluid at a greater temperature than the first fluid. Additionally, in the example shown in FIGS. 1-2, heat exchanger 12 is shown receiving the first fluid along internal fluid flow path F1 at fluid inlet 28 of first header 20. That is, first header 20 can be a relatively upstream header with respect to second header 22 along internal fluid flow path F1, and second header 22 can be a relatively downstream header. In other examples, the direction of flow of the first fluid can be reversed along internal fluid flow path F1 such that the first fluid exits rather than enters heat exchanger 12 at fluid inlet 28.

In operation, the first fluid flows along an initial segment of internal fluid flow path F1 through first duct 16 and enters heat exchanger 12 at fluid inlet 28 of first header 20. The first fluid flows along an intermediate segment of internal fluid flow path F1 through the branching tubular structure of first header 20 into core tubes 32 of core 24 and-from there-into the branching tubular structure of second header 22. Branches of internal fluid flow path F1 are diverted via a few of the core tubes 32 through mount structure 26 so that some of the first fluid passes through an internal flow passage of mount structure 26. The first fluid flows downstream into second header 22 from core tubes 32 and is discharged from second header 22 at fluid outlet 30. The first fluid flows along a final segment of internal fluid flow path F1 within second duct 18. Alternatively, the flow direction of the first fluid along internal fluid flow path F1 can be reversed. Exterior surface 27 of heat exchanger 12 is exposed to the second fluid as it flows along external fluid flow path F2, as shown in FIG. 2. Heat transfer between the first fluid and the second fluid can occur at first header 20, second header 22, core 24, and/or mount structure 26 as the first fluid flows through heat exchanger 12 along internal fluid flow path F1 and the second fluid contacts exterior surface 27 as it flows along external fluid flow path F2.

Heat exchanger 12 and its component parts (e.g., first header 20, second header 22, core 24, and mount structure 26) can be integrally formed partially or entirely by additive manufacturing. Heat exchanger 12 is made of multiple materials mixed during additive manufacturing to attain target CTEs in first header 20, second header 22, and core 24. The target CTEs reduce thermal stress in heat exchanger 12 during operation. Materials include metals, non-metals, and combinations thereof. Materials used for heat exchanger 12 include nickel-based superalloys, aluminum, titanium, chromium, molybdenum, steel, iron, carbon, nickel, copper, silicon, boron, manganese, vanadium, ceramics, and combinations thereof. Heat exchanger 12 can be made, more specifically, from a mixture of H 13 tool steel (an alloy of chromium, molybdenum, manganese, silicon, chromium, vanadium, and steel) and Deloro 22 ^{™} (an alloy of nickel, chromium, carbon, silicon, boron, and iron).

The mixture may have variable combinations and ratios of materials and ratios of those materials depending on a specific target CTE of a region within heat exchanger 12 where the material mixture is being deposited. Throughout this application, examples are given with mixtures of two materials, a first material with a first CTE and a second material with a second CTE. However, more than two materials can be used. Further, mixtures may include non-metals such as carbon and ceramics. The first material and the second material should have different CTEs, with one being higher than the other. For example, the first CTE is higher than the second CTE.

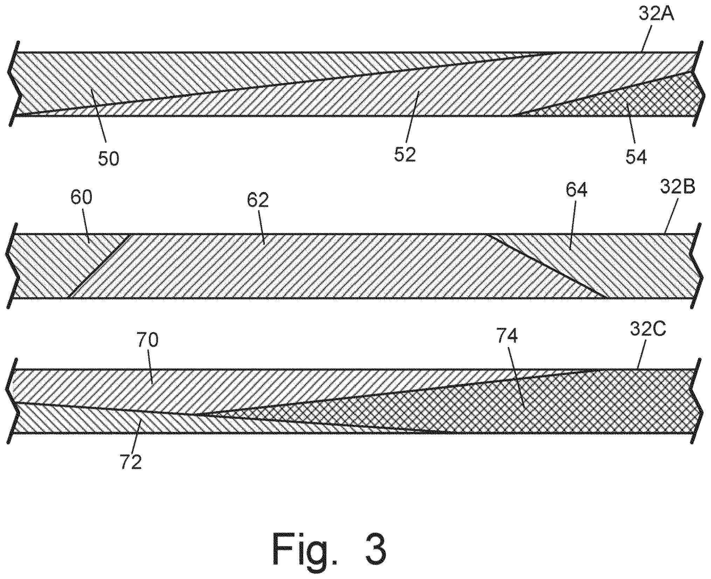

Final grain structures of material mixtures in finished heat exchanger 12 may be alloys or non-homogenized metal material. An alloy may be a solid solution of metal and non-metal elements, where all metallic grains (or crystals) have the same composition. An alloy may also be a mixture of metallic phases where two or more solutions of materials form crystals with different compositions within the metal microstructure. Non-homogenized metal materials have a microstructure of distinct crystals fused together. These crystals may be alloys or crystals of pure metal or non-metal. Particle size of the powder used during additive manufacturing can impact whether an alloy or a non-homogenized metal material is formed. Alloys or non-homogenized metal material mixtures are created by mixing and fusing constituent materials during additive manufacturing. Determining ratios of mixtures and mixing materials during additive manufacturing will be discussed in more detail below in relation to FIGS. 3-6.

Exemplary additive manufacturing processes include powder bed fusion techniques such as direct laser sintering, electron beam manufacturing, powder bed fusion, and sintering cold spray, to name a few, non-limiting examples. Additive manufacturing is useful for controlling thermal stress in heat exchanger 12 by depositing material mixtures in ratios to create target CTEs in regions of heat exchanger 12. This keeps expansion consistent across heat exchanger 12 and reduces overall stress in heat exchanger 12 during operation. Intermediate mixtures can be used to create intermediate target CTEs to blend material mixtures between regions with distinct target CTEs. This reduces cracking at interfaces of regions with different target CTEs. However, other suitable manufacturing and/or post-manufacture machining techniques can also be used.

During an additive manufacturing process, heat exchanger 12 can be formed layer by layer to achieve varied dimensions (e.g., cross-sectional area, wall thicknesses, curvature, etc.) and complex internal passages and/or components. Each additively manufactured layer creates a new horizontal build plane to which a subsequent layer of heat exchanger 12 is fused. That is, the build plane for the additive manufacturing process remains horizontal but shifts vertically by defined increments (e.g., one micrometer, one hundredth of a millimeter, one tenth of a millimeter, a millimeter, or other distances) as manufacturing proceeds. Therefore, heat exchanger 12 can be additively manufactured as a single, monolithic unit or part. Multiple materials can be mixed utilizing multiple nozzles (one for each material, mixture, or alloy, depending on what is being mixed) or a single nozzle with multiple supply lines. Mixing occurs as each layer is built on top of the previous layer. The integral formation of heat exchanger 12 by additive manufacturing allows for the consolidation of parts and can reduce or eliminate the need for any post-process machining that is typically required with traditionally manufactured components. As will be discussed in relation to FIGS. 5-6 below, additive manufacturing can also use multiple materials in varying ratios to vary CTE within heat exchanger 12.

In the example shown in FIGS. 1-2, as the first fluid moves from fluid inlet 28 to fluid outlet 30, heat is transferred through the material of heat exchanger 12. When heat exchanger 12 is made of a single metal or material the CTE is generally constant throughout heat exchanger 12. Material expands proportionally to CTE with change in temperature. A higher CTE means a greater amount of expansion per degree of increased temperature. Regions of heat exchanger 12 at a hotter temperature expand more than regions of heat exchanger 12 at a cooler temperature. Material in tubes 32 of core 24 near first header 20 is generally warmer than material in the core tubes near second header 22. A temperature gradient is created in the material of heat exchanger 12 between fluid inlet 28 and fluid outlet 30 as fluid in internal flow path F1 cools. A temperature gradient is also created radially because the fluid inside a tube 32 at any given point is hotter than the second fluid outside the tube 32. These temperature gradients cause thermal stress in the material of heat exchanger 12 when heat exchanger 12 is made of a single material with a relatively consistent CTE. Thermal stress leads to fatigue and cracking. However, building heat exchanger 12 out of varied mixtures of at least two materials allow for varied CTEs along and within each tube 32 of core 24 to keep expansion of heat exchanger 12 constant and reduce thermal stress and resultant cracking. Variation in temperature along tubes 32 and how to control expansion of and thermal stress in heat exchanger 12 with different materials will be discussed in greater detail in relation to FIG. 3.

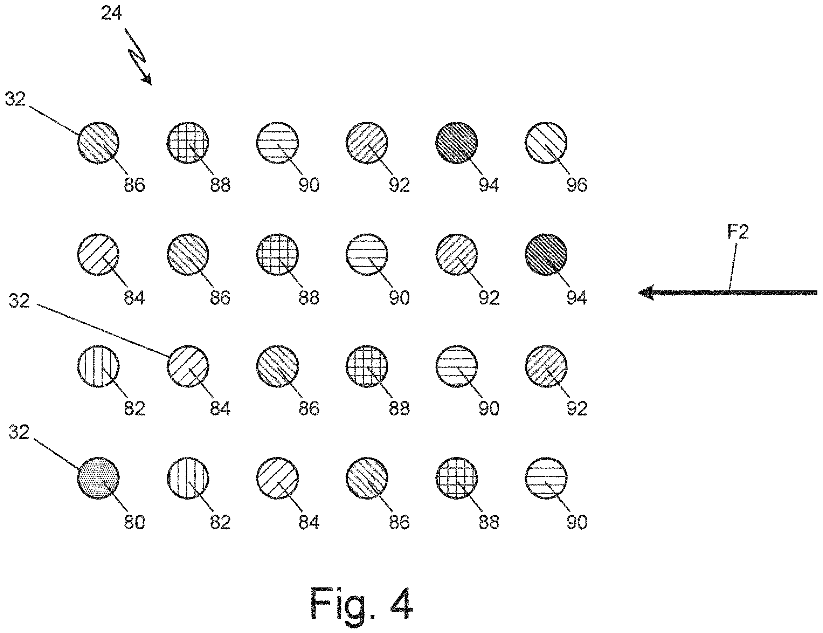

Similarly, at any cross-section through heat exchanger 12 through core 24, tubes 32 positioned upstream in external fluid flow path F2 are cooler than core tubes 32 positioned downstream in external fluid flow path F2. Individual tubes 32 in core 24 of heat exchanger 12 are at different temperatures as they convert to second header 22. When heat exchanger 12 is made from a single material with a relatively consistent CTE, tubes 32 positioned upstream in external fluid flow path F2 are cooler and have not expanded as much as warmer tubes 32 positioned downstream. When tubes 32 converge at second header 22, the differing temperatures of each tube creates thermal stress (or manifold stress) at second header 22 because each tube 32 has expanded a different amount. Further, tubes 32 may have expanded in such a way along the length of the tube 32 that they must bend to meet with second header 22. Such bending causes thermal stress in both the tube 32 that is bent and second header 22. This can cause cracking at second header 22. However, utilizing varied mixtures of at least two materials to build heat exchanger 12 allows for controlling CTE at each tube and within second header 22 to reduce manifold stress in heat exchanger 12. Reducing manifold stress is discussed in greater detail in relation to FIG. 4.

FIG. 3 is a schematic view of three tube sections 32A, 32B, and 32C, in heat exchanger 12 (shown in FIGS. 1-2). FIG. 3 includes first tube section 32A with first region 50, second region 52, and third region 54. Second tube section 32B includes first region 60, second region 62, and third region 64. Third tube section 32C includes first region 70, second region 72, and third region 74.

First tube section 32A, second tube section 32B, and third tube section 32C are example regions of tubes 32 from core 24 of heat exchanger 12 (shown in FIGS. 1-2) showing thermal stress patterns in tubes 32. First tube section 32A, second tube section 32B, and third tube section 32C may be aligned on the same tube 32, positioned adjacent to one another in neighboring tubes 32, or be in completely different regions of heat exchanger 12. Tube sections 32A, 32B, and 32C can also vary in length from one another and are shown in FIG. 3 as the same length for illustrative purposes. Tube sections 32A, 32B, and 32C can also be located in first header 20 and second header 22.

First tube section 32A includes first region 50, second region 52, and third region 54. First region 50 is near a left side of first tube section 32A, second region 52 is in a middle, and third region 54 is at a right side. First region 50 is marked by a backward-leaning hatch pattern, second region 52 is marked by a forward-leaning hatch pattern, and third region 54 is marked by a crosshatch pattern. First tube section 32A has a thermal gradient along its length. Each region 50-54 shows an average level of thermal stress. Thermal gradients in each region 50-54 cause thermal stress throughout heat exchanger 12 when first tube section 32A is made of a single material with a relatively consistent CTE. As an example thermal gradient, first region 50 is at a highest temperature, third region 54 is at a lowest temperature, and second region 52 is at a temperature between the highest and the lowest temperatures.

The temperatures of the thermal gradient and stress on first tube section 32A can be used to design a new first tube section 32A utilizing multiple materials to reduce thermal stress. To reduce thermal stress along first tube section 32A, each region 50-54 will have a slightly different target CTE. Target CTEs are chosen dependent on temperature and thermal stress in each region. Target CTEs are chosen to keep expansion equal along the length of first tube section 32A to reduce overall thermal stress in heat exchanger 12. Using the example outlined above as an example of choosing target CTEs, first region 50 (the warmest) will need a lower target CTE than second region and third region to reduce expansion of the hotter material. Second region 52 will need a target CTE higher than first region 50 and lower than third region 54. Third region 54 will need the highest target CTE of the three regions 50-54. Target CTE can be calculated utilizing thermal maps and thermal stress maps of first tube section 32A, as will be described in method 100 of FIG. 5, below.

Different CTEs can be created by mixing materials in different ratios. Where two materials are being used together to create mixtures with different CTEs, one material should have a higher CTE than the other. CTEs for different ratios of the mixed materials can be calculated. Using first tube section 32A as an example, first region 50 requires the highest target CTE. First tube section 32A is made from a first material with a higher CTE and a second material with a lower CTE. The two materials will be mixed in a ratio with a larger amount of the first material than the second material to achieve the higher target CTE necessary for first region 50. Similarly, third region 54 will have a ratio with a higher amount of the second material to create a material mixture with a lower target CTE. Target CTEs can be used together with CTEs of each material to determine ratios of each material in the material mixture. Specific discussion of calculating target CTEs and material ratios needed to build a heat exchanger with regions having the target CTEs is discussed further in relation to method 100 shown in FIG. 5

Second tube section 32B includes first region 60, second region 62, and third region 64. First region 60 is on a left side of second tube section 32B, second region 62 is in a middle, and third region 64 is on a right side of second tube section 32B. First region 60 and third region 64 are marked with a backward-leaning crosshatch pattern because both regions 50 and 54 experience a similar amount of thermal stress. Second region 62 is marked with a forward-leaning crosshatch pattern and marks a different amount of thermal stress than regions 50 and 54.

Second tube section 32B is an example of a tube section with a hot spot or a cold spot. Material making up second region 62 is at a different temperature than surrounding material, creating an region with higher thermal stress. Second tube section 32B would experience tube bending in a heat exchanger 12 made from a single material and having a relatively consistent CTE. To reduce tube bending and resulting cracking in second tube section 32B, second thermal region 62 has a different CTE than first region 60 and third region 64. For example, if second region 62 includes a hotspot, second region 62 is at a higher temperature than adjacent regions (first region 60 and third region 64). Second region 62 would have a lower CTE and expand less when heated. To achieve a different CTE, a different mixture of two materials is used to create second region 62 than first region 60 and third region 64. In another example, if second region 62 is a cold spot, second region 62 would have a higher CTE and contraction would be limited in this colder region of second tube section 32B. The resulting change in CTE of second region 62 would mean second tube section 32B would expand equally along its length regardless of cold or hot spots. Equal expansion across the length of second tube section 32B reduces thermal stress in and damage to second tube section 32B from cracking.

Third tube section 32C includes first region 70, second region 72, and third region 74. First region 70 is a quadrilateral-shaped region at a top left of third tube section 32C. Second region 72 is a triangular-shaped region on a bottom left side of third tube section 32C. Third region 74 is a pentagonal-shaped region at a right of third tube section 32C. A first side of third region 74 is adjacent to first region 70 and a second side of third region 74 is adjacent to second region 62.

Third tube section 32C is an example of an irregular pattern. In third tube section 32C, first region 70 is at a highest temperature and third tube region 74 is at a lowest temperature. Second tube region 72 is at a temperature between the highest and lowest temperatures. Each region 70-72 has a different amount of thermal stress. As discussed in relation to first tube section 32A and second tube section 32C, each region 70-72 will have a target CTE to reduce a total thermal stress across third tube section 32C. For example, first region 70 will have the lowest target CTE to reduce expansion and third region 74 will have the highest target CTE to reduce contraction. Second region 72 will have a target CTE somewhere in the middle.

First tube section 32A, second tube section 32B, and third tube section 32C are a visual representation of thermal stress in various regions of tubes 32 in heat exchanger 12. Each of first region 50, second region 52, third region 54, first region 60, second region 62, third region 64, first region 70, second region 72, and third region 74 are assigned target CTE and associated ratio of materials to keep expansion consistent along each respective tube section 32A-32C and reduce thermal stress.

Differences in material mixture ratios can change gradually along first pipe section 32A, second pipe section 32B, and third pipe section 32C. For example, in FIG. 3, the change between first thermal region 50 and second thermal region 52 of first tube section 32A is represented by a line. However, that line is not a hard transition between material ratios and occurs as gradually as necessary to reduce different rates of expansion and resulting thermal stress between first region 50 and second region 52. Varying material composition (i.e., the ratio of a first material to a second material in a material mixture for a component) allows CTE for each region of a tube 32 to be specifically selected to keep expansion across a tube 32 consistent, reduce thermal stress in the tube 32, and control the geometry of the tube. This reduces cracking in heat exchanger 12 during operation. While FIG. 3 discusses how to control expansion in different regions of tubes 32, similar assignments of target CTEs and determining resultant ratios of mixtures can be done for first header 20 and second header 22, especially in their branching structures.

FIG 4 is a schematic view of a cross section of core 24 of heat exchanger 12 taken along line 3-3 of FIG. 1. FIG. 4 includes tubes 32 at different temperature ranges including first range 80, second range 82, third range 84, fourth range 86, fifth range 88, sixth range 90, seventy range 92, eighth range 94, and ninth range 96. FIG. 4 also includes exterior fluid flow path F2 extending from a right to a left of FIG. 4.

Core 24 includes twenty-four tubes 32 arranged in a four-by-six grid. Tubes 32 are at different temperature ranges depending on placement in the grid. One tube 32 is at first range 80, which is denoted by a tight dot pattern, and is in a bottom left corner of the grid. Two tubes 32 are at second range 82, which is denoted by thin vertical lines, and are near the bottom left corner adjacent to tubes 32 at first range 80. Three pipes 32 are at third range 84, which is denoted by thin forward-leaning hatching, and are in a lower section of a left half of the grid. Four tubes 32 are at fourth range 86, which is denoted by thick backward-leaning hatching, and are adjacent to tubes 32 at third range 84. Four tubes 32 are at a fifth range 88, which is denoted by a grid pattern, and are near a middle of the grid adjacent to tubes 32 at fourth range 86. Four tubes 32 are at a sixth range 90, which is denoted by thin horizontal lines, and extend diagonally up and left from a bottom right corner of the grid of tubes 32. Three tubes 32 are at seventh range 92, which is denoted by thick, forward-leaning hatching, and are in an upper section of a right half of the grid. Two tubes 32 are at eighth range 94, which is denoted by close-packed, backward-leaning hatching, and are near a top right corner of the grid. One tube 32 is at ninth range 96, which is denoted by thin backward-leaning hatching, and is in the top right corner of the grid.

Tubes 32 in FIG. 4 make up core 24 of heat exchanger 12 (shown in FIG. 1). Following the flow conventions of FIG. 1, each tube contains a fluid following internal fluid flow path F 1, so the fluid within tubes 32 is flowing toward the top plane of FIG. 4. FIG. 4 shows a cross-section through heat exchanger 12 near second header 22 (shown in FIG. 1). Fluid in tubes 32 has been cooled or partially cooled as it moved through core 24 and is at different temperatures in FIG. 4. Proximity to an upstream region of exterior flow path F2 (a cooling flow path in this example) means tubes 32 located on a right of FIG. 4 are cooler than those at a left of FIG. 4. First range 80 is the warmest temperature range and ninth range 96 is the coolest temperature range. Ranges between first range 80 and ninth range 96 grow increasingly warmer moving from the bottom left of the grid of tubes 32 to the top right.

In a heat exchanger made of a single material, tubes at different temperature ranges 80-96 will expand different amounts because of the approximately consistent CTE between tubes 32. Different amounts of expansion cause tube bending and manifold stress in second header 22 (shown in FIG. 1) as pipes 32 converge into second header 22. Each tube 32 shown in FIG. 4 can instead be designed to have a different target CTE and ratio of materials to create the target CTEs for each pipe. Specific composition of the materials used to create tubes 32 (or the ratio of the material mixture) is determined by temperature variation and thermal stress on individual pipes in operating condition. Keeping expansion of tubes 32 similar reduces thermal stress in heat exchanger 12. Keeping tubes 32 at approximately the same amount of expansion also reduces tube bending near second header 22. This reduces manifold stress and the likelihood of cracks forming in second header 22.

FIG. 5 is a flow chart showing method 100, which includes steps 102-112. Method 100 produces a heat exchanger 12 with multiple materials combined in different ratios to reduce thermal stress. Method 100 will be described in relation to heat exchanger 12 of FIGS. 1-2. Method 100 maps target CTEs onto heat exchanger 12. Method 100 also calculates ratios of material mixtures to use when building heat exchanger 12.

Step 102 of method 100 includes performing thermal analysis of heat exchanger 12 during operation to obtain a temperature distribution. Step 102 requires analysis of heat transfer from internal fluid flow path F1 through material of heat exchanger 12 to external fluid flow path F2. Step 102 does this analysis based on a heat exchanger 12 made of a single material with a relatively consistent CTE throughout. The goal of this analysis is to determine temperatures in different regions of heat exchanger 12 while it is operating. Thermal analysis can be focused on temperatures in heat exchanger 12 during a peak operational phase in step 102. The peak operational phase of heat exchanger 12 is when heat exchanger 12 is fully heated and operating. However, thermal analysis can be done while heat exchanger 12 is in a transitional operational phase, as described above. Other variables that can factor into analysis done in step 102 include altitude, temperature of the first fluid moving through internal fluid flow path F1 (shown in FIGS. 1-2), and temperature of the second fluid moving through external fluid flow path F2 (shown in FIGS. 1-2). Step 102 provides thermal data necessary to calculate thermal stress and target CTEs for heat exchanger 12.

Step 104 includes performing structural analysis of thermal stress on the heat exchanger during operation utilizing the temperature distribution. Structural analysis in step 104 creates a map of thermal stress in heat exchanger 12 based on the thermal analysis in step 104. Thermal stress can be mapped onto heat exchanger 12 to show regions experiencing the same or similar levels of thermal stress using isobaric lines or colors on a three-dimensional model of heat exchanger 12. A combined output of steps 102-104 gives the approximate temperature and amount of thermal stress heat exchanger 12 is experiencing during operation. This model can be used to determine regions of heat exchanger 12 that are expanding or contracting into adjacent regions during operation.

Step 106 includes identifying amounts of thermal stress in regions of heat exchanger 12 during operation. Utilizing outputs from the analyses in steps 102-104, degrees of thermal stress can be identified in heat exchanger 12 when it is made from a single material with a relatively consistent CTE. Regions of thermal stress can be ranked and compared to identify regions with very high thermal stress, moderately high thermal stress, low thermal stress, etc. For example, a region with a hot spot, a cold spot, tube bending, or with high transitional loads could be identified in step 106 as having high thermal stress. A region with high thermal stress is a region with higher levels of thermal stress than at least one adjacent region. Similarly, regions of high thermal stress can be identified in first header 20 and second header 22 to reduce manifold stress (as discussed in relation to FIG. 4).

Step 108 includes determining target CTEs in regions in heat exchanger 12 to reduce thermal stress. When utilizing multiple materials to build heat exchanger 12, individual regions can have target CTEs to better control expansion and resultant thermal stress. Utilizing outputs from steps 102-106, a target CTE can be assigned to a region with high thermal stress. The specific value of the target CTE is based on the temperature and thermal stress of that region and surrounding regions during operation.. A target CTE is chosen for each region to reduce thermal stress in the region and overall thermal stress in heat exchanger 12. The target CTEs in heat exchanger 12 reduce thermal stress in each of the regions with high thermal stress. Target CTEs can be visualized on a target CTE map three-dimensional model of heat exchanger 12 with target CTEs shown on the map.

A higher CTE may be chosen to reduce thermal stress in an under-expanding region in heat exchanger 12. A higher CTE is chosen to increase expansion of the region. As an example, if second region 62 of second pipe section 32B (shown in FIG. 3) is a cold spot which expands less in a heat exchanger 12 made from a single material with a relatively consistent CTE, thermal stress is caused by second region 62 pulling on first region 60 and third region 64. A higher target CTE can be used for second region 62 to increase expansion and reduce thermal stress. A region with a higher CTE can reduce stress caused by under expansion of a region.

A lower CTE may be chosen to reduce thermal stress caused by over-expansion in a region in heat exchanger 12. A lower CTE is chosen to decrease expansion of the region. As an example, if second region 62 of second pipe section 32B is a hot spot which expands more in a heat exchanger 12 made from a single material with a relatively consistent CTE, thermal stress is caused by second region 62 pushing into first region 60 and third region 64. A lower target CTE in second region 62 will reduce expansion in that region and thermal stress. A lower CTE can reduce stress caused by over expansion of material in a region of heat exchanger 12.

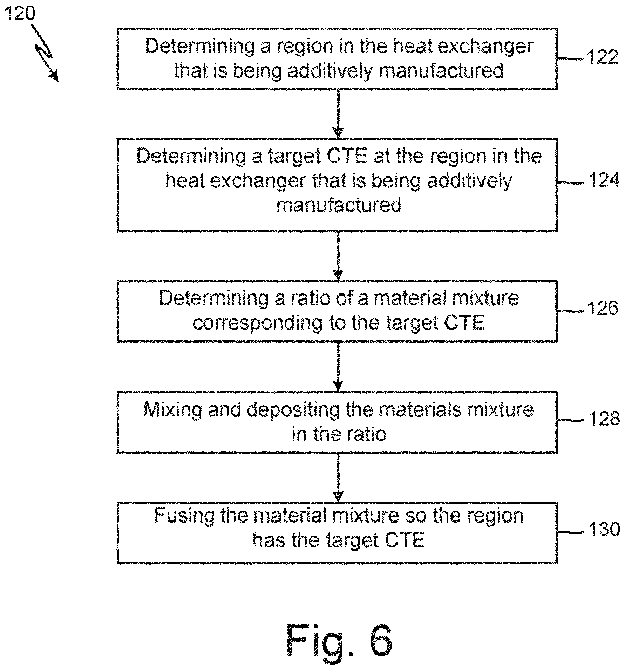

Step 110 includes choosing materials to build heat exchanger 12. Materials include metals, non-metals, and combinations thereof. Example materials that can be used for heat exchanger 12 include nickel-based superalloys, aluminum, titanium, chromium, molybdenum, steel, iron, carbon, nickel, copper, silicon, boron, manganese, vanadium and combinations thereof. Heat exchanger 12 can be made, more specifically, from a mixture of H13 tool steel (an alloy of chromium, molybdenum, manganese, silicon, chromium, vanadium, and steel) and Deloro 22 ^{™} (an alloy of nickel, chromium, carbon, silicon, boron, and iron). Two materials are used throughout this discussion as examples. However, more than two materials can be combined and used with methods 100 and 120 (shown in FIG. 6).

When choosing materials to build heat exchanger 12, knowledge of the metallurgic effect of combining materials is required. Materials combined to build heat exchanger 12 must be able to fuse to create a non-homogenized metal or an alloy. Knowledge of how the materials will combine is also a factor in choosing which materials to use. For example, if an alloy with a uniform particle (or crystal) compositions is required, materials must be chosen to produce that result. Another consideration is particle size of additive manufacturing powder. Powder size should be chosen in line with creation of an alloy or non-homogenized metal, depending on the desired outcome.

Materials can also be chosen based on the range of target CTEs necessary to reduce thermal stress in heat exchanger 12. For example, materials with very different CTEs may be chosen to build heat exchanger 12 because a larger range of target CTEs can be made from those materials. How materials combine may also affect CTE. For example, a mixture of material grains will have a different CTE than an alloy even when made from the same ratio of constituent materials. Step 110 allows for ratios of materials to be calculated for each target CTE during step 112.

Step 112 includes manufacturing the heat exchanger with the assigned material mixtures positioned in the corresponding identified regions of the heat exchanger. Step 112 can be accomplished through an additive manufacturing process to place the proper mixture in the correct region. Regions of heat exchanger 12 will have different geometric regions with different ratios of materials and resultant target CTEs. Additive manufacturing processes, including powder bed fusion, electron beam sintering, and cold spray sintering, can be used to additively manufacture heat exchanger 12 with multiple materials. An embodiment of an additive manufacturing process will be discussed in relation to method 120 (shown in FIG. 6).

Process 100 is used to design and manufacture a heat exchanger 12 with multiple materials. Utilizing multiple materials in specific ratios and placement in heat exchanger 12 reduces overall thermal stress in heat exchanger 12 during operation. Lower thermal stress reduces material fatigue and cracking. Process 100 also creates heat exchangers with more predictable CTEs. Additively manufactured heat exchangers made from a single material do not have a single, uniform CTE. Variations in CTE are caused by differences in grain structure and microcracks in the additively manufactured material. The differences in CTE can be unpredictable in placement and degree. This increases thermal stress in heat exchanger 12. By determining both target CTE and the placement of the material mixture which has the target CTE, thermal stress is reduced overall in heat exchanger 12.

FIG. 6 is a flow chart showing method 120 of additively manufacturing heat exchanger 12 with multiple materials. Method 120 includes steps 122-130. Method 120 will be described in relation to heat exchanger 12 (shown in FIGS. 1-2). Method 120 uses information determined and choices made in method 100 and can be used as step 112 in method 100 (shown in FIG. 5).

Step 122 includes determining a position in heat exchanger 12 that is being additively manufactured. Additive manufacturing processes create a new horizontal build plane to which a subsequent layer of heat exchanger 12 is fused. In step 122, the additive manufacturing device will track which horizontal plane is being built and the region in the horizontal plane where material is actively being deposited.

Step 124 includes determining a target CTE at the position in heat exchanger 12 that is being additively manufactured. Once the current build position is determined in step 122, the target CTE of that position is determined based on information developed and calculated in method 100. This can be done by comparing the position to the corresponding position on the target CTE model created in step 108 of method 100.

Step 126 includes determining a material mixture corresponding to the target CTE. Based on the region, as determined in step 122, and the target CTE in that region from step 124, a material mixture is determined for deposition. Determining the material mixture can include calculating a ratio of materials to achieve the target CTE. Calculations of ratios of material mixtures can be done by the additive manufacturing device as heat exchanger 12 is being built. For example, the additive manufacturing device may use the target CTE and the CTEs of each constituent material to calculate a ratio for each position as additive manufacturing is taking place. Alternatively, or in addition to calculating, a chart with different ratios for target CTEs that need to be built in heat exchanger 12 can be used to determine the ratio of the material mixture. An intermediate target CTE can also be calculated if additively manufacturing between two regions. Such a calculation includes the position of the nozzle between two regions and a grading between the two target CTEs. The material mixture determines the CTE of the finished product. Step 126 ensures the proper material mixture is being placed in the position that is being bult so the finished heat exchanger 12 has CTEs placed within the material as expected.

Step 128 includes mixing and depositing the material mixture in the ratio determined in step 126. Additive manufacturing devices can mix and deposit multiple materials at once. One way uses multiple nozzles to apply material powder. One nozzle is used for each material powder. Each nozzle lays down the appropriate amount of powder for the ratio being applied. For example, an additive manufacturing device trying to deposit a 1:1 mixture of a first material and a second material will calculate the entire amount of powder that will be deposited in the position the nozzle is in. Then, the device will deposit half that amount using the first nozzle and the remainder with the second nozzle. The first nozzle and the second nozzle can deposit their respective materials sequentially or simultaneously. A second way of depositing multiple materials uses one nozzle supplied by multiple lines. Each line contains a different material powder that is delivered to and mixed in the nozzle in the proper ratio for the target CTE in the position. Using the example of a material ratio of 1:1 as described above, this device will supply equal amounts of powder from each supply line and mix and deposit the material powder. Mixing and depositing the materials in the proper ratio of is an efficient way to additively manufacture with multiple materials.

Step 130 includes fusing the material mixture to form heat exchanger 12. Step 130 utilizes typical fusing methods in additive manufacturing including lasers and electron beams. Fusing methods melt material powder on a top layer, which is then fused to the previous layer below. Step 122 produces a solid material with the target CTE. Steps 122-130 are continually repeated until the entirety of heat exchanger 12 is built. Other additive manufacturing processes, like stress relief, internal support removal, heat treatment, and surface finishing can be completed after method 120 is finished.

Method 130 produces a heat exchanger 12 with multiple materials positioned strategically to reduce overall thermal stress in the heat exchanger 12. Utilizing multiple materials allows for predictably variable CTEs in heat exchanger 12 to reduce local thermal stress. Heat exchanger 12 made of multiple materials with target CTEs has a higher reliability and durability that other additively manufactured heat exchangers due to less thermal stress and resultant fatigue and cracking.

### Discussion of Possible Embodiments

The following are non-exclusive descriptions of possible embodiments of the present invention.

A heat exchanger includes a first header, a second header, and a core. The first header includes a fluid inlet. The second header is positioned downstream of the first header with respect to a first flow path of a first fluid. The second header includes a fluid outlet. The core extends from the first header to the second header. The core includes a plurality of tubes. The heat exchanger also includes a first region which is at a higher temperature than regions adjacent to the first region. The first region is made of a first mixture of materials in a first ratio. The first mixture of materials causes a coefficient of thermal expansion in the first region to be lower than coefficients of thermal expansion in the regions adjacent to the first region.

The heat exchanger of the preceding paragraph can optionally include, additionally and/or alternatively, any one or more of the following features, configurations and/or additional components:

A further embodiment of the foregoing heat exchanger, wherein the materials in the first mixture of materials are chosen from the group consisting of chromium; molybdenum; steel; iron; carbon; aluminum; nickel; copper; manganese; vanadium; ceramics; an alloy of chromium, molybdenum, manganese, silicon, chromium, vanadium, and steel (H13 tool steel); an alloy of nickel, chromium, carbon, silicon, boron, and iron (Deloro 22^{™}); and combinations thereof.

A further embodiment of any of the foregoing heat exchangers, wherein the heat exchanger is made of a plurality of mixtures of materials, and wherein each mixture of material has a distinct ratio of materials from the first ratio.

the mixture of materials includes a first material and a second material. The first material has a first coefficient of thermal expansion. The second material has a second coefficient of thermal expansion. The first coefficient of thermal expansion is higher than the second coefficient of thermal expansion.

A further embodiment of any of the foregoing heat exchangers, wherein the mixtures of materials are an alloy in the heat exchanger.

A further embodiment of any of the foregoing heat exchangers, wherein the alloy has metallic grains with different compositions.

A further embodiment of any of the foregoing heat exchangers, wherein the alloy has metallic grains that are of the same composition.

A further embodiment of any of the foregoing heat exchangers, wherein the mixtures of materials are a non-homogenized metallic mixture in the heat exchanger.

A further embodiment of any of the foregoing heat exchangers, wherein the first header and the second header each have a branching tubular structure.

A further embodiment of any of the foregoing heat exchangers, wherein each terminal branch of each branching tubular structure attaches to a tube in the plurality of tubes of the core.

A further embodiment of any of the foregoing heat exchangers, wherein the first region is in the branching tubular structure of the second header.

A further embodiment of any of the foregoing heat exchangers, wherein the first region is in the branching tubular structure of the first header.

A further embodiment of any of the foregoing heat exchangers, wherein the first region is in a tube of the core.

A further embodiment of any of the foregoing heat exchangers, wherein the temperature of the first region is higher than the regions adjacent to the first region when the heat exchanger is in a transitional operational phase.

A further embodiment of any of the foregoing heat exchangers, wherein the temperature of the first region is higher than the regions adjacent to the first region when the heat exchanger is in a peak operation phase.

A further embodiment of any of the foregoing heat exchangers, wherein the regions adjacent to the first region are made of mixtures of materials in ratios different from the first ratio.

A further embodiment of any of the foregoing heat exchangers, wherein the first region is positioned in the heat exchanger to reduce thermal stress.

A method of manufacturing a heat exchanger with multiple materials includes performing thermal analysis of a heat exchanger to obtain a temperature distribution. The method further includes performing structural analysis of thermal stress in the heat exchanger utilizing the temperature distribution. The method further includes identifying regions of the heat exchanger with levels of thermal stress higher than in adjacent regions. The method further includes determining target coefficients of thermal expansion for each of the identified regions with high levels of thermal stress. The target coefficients of thermal expansion reduce thermal stress in each of the identified regions with high levels of thermal stress. The method also includes choosing materials with which to manufacture the heat exchanger. The method further includes manufacturing the heat exchanger by mixing the materials create the target coefficients of thermal expansion in the identified regions of high thermal stress.

The method of the preceding paragraph can optionally include, additionally and/or alternatively, any one or more of the following features, configurations and/or additional components:

A further embodiment of the foregoing method, wherein manufacturing the heat exchanger occurs by an additive manufacturing process selected from the group consisting of laser sintering, selective laser melting, electron-beam additive manufacturing, powder bed fusion, and cold spray additive manufacturing.

A further embodiment of any of the foregoing methods, wherein additively manufacturing the heat exchanger includes determining a region in the heat exchanger that is being additively manufactured. The method also includes determining the target coefficient of thermal expansion at the region in the heat exchanger that is being additively manufactured. The method also includes determining a ratio of a mixture of the materials to manufacture the target coefficient of thermal expansion in the region. The method also includes mixing and depositing the mixture of the materials in the ratio. The method also includes fusing the mixture of materials so the region being additively manufactured has the target coefficient of thermal expansion.

A further embodiment of any of the foregoing methods, wherein the mixture of materials includes a first material and a second material. The first material has a first coefficient of thermal expansion. The second material has a second coefficient of thermal expansion. The first coefficient of thermal expansion is higher than the second coefficient of thermal expansion.

A further embodiment of any of the foregoing methods, wherein the materials are chosen from the group consisting of chromium; molybdenum; steel; iron; carbon; aluminum; nickel; copper; manganese; vanadium; an alloy of chromium, molybdenum, manganese, silicon, chromium, vanadium, and steel (H13 tool steel); an alloy of nickel, chromium, carbon, silicon, boron, and iron (Deloro 22^{™}); and combinations thereof.

A further embodiment of any of the foregoing methods, wherein the thermal analysis and the structural analysis are done using data from the heat exchanger during a peak operational phase.

A further embodiment of any of the foregoing methods, wherein the thermal analysis and the structural analysis are done using data from the heat exchanger during a transitional operational phase.

While the invention has been described with reference to an exemplary embodiment(s), it will be understood by those skilled in the art that various changes may be made without departing from the scope of the invention as defined by the claims. In addition, many modifications may be made to adapt a particular situation or material to the teachings of the invention without departing from the scope of the claims. Therefore, it is intended that the invention not be limited to the particular embodiment(s) disclosed, but that the invention will include all embodiments falling within the scope of the appended claims.

## Claims

1. A heat exchanger comprising:
a first header (20) including a fluid inlet (28);
a second header (22) positioned downstream of the first header with respect to a first flow path of a first fluid and including a fluid outlet (30);
a core (24) extending from the first header to the second header, the core comprising a plurality of tubes (32); and
a first region (60) in the heat exchanger at a higher temperature than regions adjacent to the first region, wherein the first region is made of a first mixture of materials in a first ratio, and wherein the first mixture of materials causes a coefficient of thermal expansion in the first region to be lower than coefficients of thermal expansion in the regions adjacent to the first region.

2. The heat exchanger of claim 1, wherein the materials in the first mixture of materials are chosen from the group consisting of chromium; molybdenum; steel; iron; carbon; aluminum; nickel; copper; manganese; vanadium; ceramics; an alloy of chromium, molybdenum, manganese, silicon, chromium, vanadium, and steel; an alloy of nickel, chromium, carbon, silicon, boron, and iron; and combinations thereof.

3. The heat exchanger of claim 1, wherein the heat exchanger is made of a plurality of mixtures of materials, and wherein each mixture of materials has a distinct ratio of materials from the first ratio.

4. The heat exchanger of claim 3, wherein each mixture of materials comprises:
a first material with a first coefficient of thermal expansion; and
a second material with a second coefficient of thermal expansion;
wherein the first coefficient of thermal expansion is higher than the second coefficient of thermal expansion.

5. The heat exchanger of any preceding claim, wherein the mixtures of materials are an alloy in the heat exchanger.

6. The heat exchanger of any preceding claim, wherein the first header (20) and the second header (22) each have a branching tubular structure.

7. The heat exchanger of claim 6, wherein the first region is in the branching tubular structure of the second header, or wherein the first region is in the branching tubular structure of the first header

8. The heat exchanger of any of claims 1 to 6, wherein the first region is in a tube of the core.

9. The heat exchanger of any preceding claim, wherein the temperature of the first region is higher than the regions adjacent to the first region when the heat exchanger is in a transitional operational phase, or wherein the temperature of the first region is higher than the regions adjacent to the first region when the heat exchanger is in a peak operational phase.

10. The heat exchanger of any preceding claim, wherein the regions adjacent to the first region are made of mixtures of materials in ratios different from the first ratio.

11. A method of manufacturing a heat exchanger with multiple materials, the method comprising:
performing thermal analysis of a heat exchanger to obtain a temperature distribution;
performing structural analysis of thermal stress in the heat exchanger utilizing the temperature distribution;
identifying regions of the heat exchanger with levels of thermal stress higher than in adjacent regions;
determining target coefficients of thermal expansion for each of the regions with levels of thermal stress higher than in the adjacent regions, wherein the target coefficients of thermal expansion reduce thermal stress in each of the regions with high levels of thermal stress;
choosing materials with which to manufacture the heat exchanger; and
manufacturing the heat exchanger by mixing the materials in the regions of high thermal stress to create the target coefficients of thermal expansion in the regions.

12. The method of claim 11, wherein manufacturing the heat exchanger occurs by an additive manufacturing process selected from the group consisting of laser sintering, selective laser melting, electron-beam additive manufacturing, powder bed fusion, and cold spray additive manufacturing.

13. The method of claim 11 or 12, wherein additively manufacturing the heat exchanger comprises:
determining a region in the heat exchanger that is being additively manufactured;
determining the target coefficient of thermal expansion at the region in the heat exchanger that is being additively manufactured;
determining a ratio of a mixture of the materials to manufacture the target coefficient of thermal expansion in the region;
mixing and depositing the mixture of the materials in the ratio; and
fusing the mixture of materials so the region being additively manufactured has the target coefficient of thermal expansion, and optionally wherein the mixture of metals comprises:
a first material with a first coefficient of thermal expansion; and
a second material with a second coefficient of thermal expansion;
wherein the first coefficient of thermal expansion is higher than the second coefficient of thermal expansion.

14. The method of claim 11, 12 or 13, wherein the materials are chosen from the group consisting of chromium; molybdenum; steel; iron; carbon; aluminum; nickel; copper; manganese; vanadium; ceramics; an alloy of chromium, molybdenum, manganese, silicon, chromium, vanadium, and steel (H13 tool steel); an alloy of nickel, chromium, carbon, silicon, boron, and iron (Deloro 22^{™}); and combinations thereof.

15. The method of any of claims 11 to 14, wherein the thermal analysis and the structural analysis are done using data from the heat exchanger during a peak operational phase, or wherein the thermal analysis and the structural analysis are done using data from the heat exchanger during a transitional operational phase.
